# EUROPÄISCHE PATENTSCHRIFT

(11) **EP 3 364 088 B1**
(45) Veröffentlichungstag und Bekanntmachung des Hinweises auf die Patenterteilung: **17.06.2020**
(21) Anmeldenummer: 18153009.8
(22) Anmeldetag: 23.01.2018
(51) Int. Cl.: F16L 33/207, B21D 17/02, B21D 17/04, B21D 22/20, B21D 28/28, B21D 39/04

(54) **QUETSCHKUPPLUNG ZUR VERBINDUNG EINES SCHLAUCHES MIT EINEM ROHRLEITUNGSNIPPEL**
COMPRESSION COUPLING FOR CONNECTING A HOSE WITH A PIPE NIPPLE
RACCORD À SERRAGE PERMETTANT DE RACCORDER UN TUYAU À UN RACCORD DE TUYAUTERIE

(30) Priorität: 16.02.2017 DE 102017103156
(43) Veröffentlichungstag der Anmeldung: 22.08.2018
(73) Patentinhaber: KA Group AG, 8001 Zurich (CH)
(72) Erfinder: Mentink, Laurentius Andreas Gerardus, Haaksbergen (NL)
(74) Vertreter: Uexküll & Stolberg

(56) Entgegenhaltungen:
- EP-A1- 0 523 835
- DE-A1- 2 459 690
- DE-A1- 19 700 583
- US-A- 3 549 180
- US-A- 3 590 455
- US-A1- 2004 244 459

## Beschreibung

Die vorliegende Erfindung betrifft eine Quetschkupplung zur Verbindung eines Schlauches mit einem Rohrleitungsnippel, ein Verfahren zum Verbinden eines Schlauches mit einem Rohrleitungsnippel unter Verwendung einer solchen Quetschkupplung, und ein Verfahren zur Herstellung einer Quetschkupplung zur Verbindung eines Schlauches mit einem Rohrleitungsnippel.

Quetschkupplungen werden dazu verwendet, um flexible Schläuche, die aus elastomeren Materialien bestehen können, mit metallischen Rohrleitungsnippeln zu verbinden, die ihrerseits mit einer weiteren Komponente verbunden sein können oder in eine solche münden können. Ein typisches Einsatzgebiet für solche Schlauchkupplungen ist in der Kraftfahrzeugtechnik, wo pneumatische und hydraulische Fluidleitungen, Leitungen für Klimaanlagen, Leitungen für pneumatische Einstellorgane für Fahrzeugsitze und viele andere Fluidleitungen, die teilweise aus flexiblen Schläuchen bestehen, mit Rohrleitungsnippeln zu verbinden sind. Eine Quetschkupplung weist im Wesentlichen einen Rohrleitungsnippel und eine Quetschhülse auf, die auch als Klemm- oder Crimphülse bezeichnet wird. Der Rohrleitungsnippel weist ein zylindrisches Rohrleitungsende auf, dessen Außendurchmesser an den Innendurchmesser des zu verbindenden Schlauchs angepasst ist. Häufig ist es bevorzugt, wenn der wenn der Außendurchmesser des Rohrleitungsendes etwas größer als der Innendurchmesser des Schlauchs ist, da dieser dann aufgrund seiner elastischen Flexibilität unter Spannung auf dem Rohrleitungsende sitzt. Grundsätzlich kann der Außendurchmesser des Rohrleitungsendes aber auch etwas kleiner als der Innendurchmesser des Schlauchs sein.

Ferner hat der Rohrleitungsnippel in der Regel einen nach außen vorstehenden, umlaufenden Anschlagbund, der eine Begrenzung für das Aufschieben der Quetschhülse auf das zylindrische Rohrleitungsende bildet. Nachdem die Quetschhülse bis in Anlage an den Anschlagbund aufgeschoben ist, befindet sich das Schlauchende in dem ringförmigen Zwischenraum zwischen Rohrleitungsende und Quetschhülse und reicht bis an das am Anschlagbund anliegende Ende der Quetschhülse. Anschließend wird die Quetschhülse durch radial nach innen wirkende CrimpWerkzeuge verformt, so dass das innerhalb der Quetschhülse liegende Schlauchende zwischen der gequetschten Quetschhülse und dem Rohrleitungsende des Nippels festgeklemmt wird. Dabei ist zwischen Quetschkupplungen für Niederdruckanwendungen und solchen für stärker belastete Hochdruckanwendungen zu unterscheiden.

Bei Quetschkupplungen für Niederdruckanwendungen reicht ein kraftschlüssiger Eingriff der Quetschhülse am Rohrleitungsnippel aus. Es können daher einfach geformte Quetschhülsen verwendet werden, die durch Tiefziehen hergestellt werden können. Dazu wird Metallblech durch Tiefziehen zunächst in die Form eines Bechers gebracht, d.h. eine im Wesentlichen zylindrische Hülle mit einer geschlossenen Endseite, die im Wesentlichen eben ist und mit einem gekrümmten Randbereich in den zylindrischen Teil übergeht. In die geschlossene Endseite wird eine kreisförmige, koaxial zur Hüllenachse liegende Öffnung gestanzt. Nach dem Ausstanzen der Öffnung bleibt an der ursprünglich geschlossenen Endseite am äußeren Rand der Öffnung ein umlaufender Flansch stehen, der auf die Hülsenachse zu gerichtet ist und dessen durch das Stanzen gebildete, auf die Hülsenachse zu weisende Wandseite parallel zur Hülsenachse liegt. Quetschhülsen dieser Art sind zum Beispiel in DE 38 22 041 C1 und DE 20 2016 004 177 U1 beschrieben.

Solche Quetschhülsen können mit Rohrleitungsnippeln verwendet werden, die durch Kaltumformen aus einem zylindrischen Rohrleitungsstück gebildet werden, indem durch Auffalten eines Anschlagbundes eine Anlagefläche geschaffen wird, an die der Flansch der Quetschhülse nach Aufschieben auf das zylindrische Rohrleitungsende zur Anlage kommt. Nach dem Crimpen der Quetschhülse besteht dann, wie schon oben erwähnt, ein rein kraftschlüssiger Eingriff der Klemmhülse, weswegen solche Quetschkupplungen nur für Niederdruckanwendungen und Anwendungen eingesetzt werden, bei denen keine Zugkräfte auf den Schlauch einwirken und insofern kein Risiko besteht, dass Schlauch und Quetschhülse von dem Rohrleitungsnippel abgezogen werden könnten.

Für Quetschkupplungen, die unter größeren Belastungen stehen, müssen komplizierter hergestellte Quetschhülsen verwendet werden, denn sie müssen durch das Crimpen in formschlüssigen Eingriff an dem Rohrleitungsnippel gebracht werden. Eine solche komplizierte geformte Quetschhülse ist z.B. in EP 2 510 271 B1 beschrieben, die neben dem zylindrischen Abschnitt und dem Flansch an der vorderen Öffnung ein von dem Flansch vorsehendes weiteres Wandstück aufweist, das beim Quetschvorgang mit einem komplizierten Quetschwerkzeug umgeformt und so in Anlage an die von dem Flansch der Klemmhülse abgewandte Seite des Anschlagbundes kommt und so einen formschlüssigen Eingriff mit dem Anschlagbund des Rohrleitungsnippels herstellt. Weitere Beispiele für Quetschhülsen, die mit Strukturen versehen sind, die nach dem Quetschen in formschlüssigen Eingriff mit komplementären Gegenstrukturen an dem Rohrleitungsnippel kommen, sind in EP 0 161 864 A1 und DE 32 43 365 C2 beschrieben. Solche für höhere Belastungen geeigneten Quetschkupplungen haben den Nachteil, dass die zugehörigen Quetschhülsen nicht einfach durch Tiefziehen und Stanzen einer Öffnung hergestellt werden können, sondern kompliziertere Herstellungsverfahren notwendig machen. In EP 0 161 864 A1 ist beschrieben, dass die Quetschhülse mit ihren Eingriffsstrukturen gegossen werden kann oder diese Eingriffsstrukturen durch spanende Verfahren hergestellt werden müssen. Dadurch sind solche Quetschhülsen für Quetschkupplungen für höhere Belastungen wesentlich teurer als die oben zuerst beschriebenen Quetschhülsen, die einfach durch Tiefziehen und Stanzen hergestellt werden können.

Aus der EP 0 523 835 A1 ist eine Quetschkupplung zur Verbindung einer Leitung mit einem Rohrleitungsnippel bekannt. In einem rohrförmigen Buchsenabschnitt der Quetschhülse ist ein Einsatz mit auf der Innenseite angeordneten Rippen vorgesehen. Darauf folgt ein verjüngter Abschnitt, der in einem Kragenabschnitt endet. Der Kragen umgibt eine vordere Öffnung der Hülse und greift mit einem nach innen gebogenen Rand in eine Nut auf dem Rohrleitungsnippel ein. Beim Quetschen der Quetschhülse greifen die Rippen des Einsatzes in die Leitung ein, um diese zu sichern.

Es ist Aufgabe der vorliegenden Erfindung, eine Quetschkupplung zur Verbindung eines Schlauches mit einem Rohrleitungsnippel so auszugestalten, dass mit einer einfachen und kostengünstig herstellbaren Quetschhülse nach dem Quetschen ein formschlüssiger Eingriff der Quetschhülse mit dem Rohrleitungsnippel herstellbar ist. Weiterhin soll ein Verfahren zur Herstellung einer solchen Quetschkupplung sowie ein Verfahren zum Verbinden eines Schlauches mit einem Rohrleitungsnippel unter Verwendung einer solchen Quetschkupplung angegeben werden.

Zur Lösung dieser Aufgabe dient die Quetschkupplung mit den Merkmalen des Patentanspruchs 1. Ein Verfahren zum Verbinden eines Schlauches mit einem Rohrleitungsnippel unter Verwendung einer solchen Quetschkupplung ist in Patentanspruch 11 angegeben. Schließlich ist in Anspruch 12 ein Verfahren zur Herstellung einer Quetschkupplung zur Verbindung eines Schlauches mit einem Rohrleitungsnippel angegeben. Vorteilhafte Ausführungsformen der Erfindung sind in den Unteransprüchen aufgeführt.

Die Quetschkupplung zur Verbindung eines Schlauches mit einem Rohrleitungsnippel umfasst den Rohrleitungsnippel, an dem ein nach außen vorstehender Anschlagbund und eine in axialer Richtung des Rohrleitungsnippels in konstantem Abstand dazu um den Umfang verlaufende Nut gebildet sind. Die Quetschkupplung umfasst ferner eine auf den Rohrleitungsnippel aufschiebbare Quetschhülse, die durch Tiefziehen geformt ist und in deren ursprünglich geschlossene Endseite eine kreisförmige, koaxiale, vordere Öffnung zum Aufschieben auf den Rohrleitungsnippel gestanzt ist. Die Quetschhülse hat an der vorderen Öffnung einen auf die Hülsenachse gerichteten Flansch, der nach dem Stanzen der vorderen Öffnung in die ursprünglich geschlossene Endseite als Rand stehengeblieben ist und dessen gestanzte Wandseite parallel zur Hülsenachse liegt. Am anderen Ende der Quetschhülse liegt ein sich über einen Großteil der Länge der Quetschhülse erstreckender zylindrischer Abschnitt. An dem Rohrleitungsnippel ist der Abstand zwischen dem Anschlagbund und der Nut so bemessen, dass der Flansch der Quetschhülse, wenn er an dem Anschlagbund anliegt, mit seiner von dem Anschlagbund abgewandten unteren Kante der gestanzten Wandseite über der Nut liegt. In der Quetschhülse ist zwischen dem Flansch und dem zylindrischen Abschnitt ein sich verjüngender Gelenkabschnitt gebildet, der ausgehend von einem größeren Radius zur Hülsenachse des anschließenden zylindrischen Abschnitts zu einem kleineren Radius des anschließendes Endes des Flansches sich derart verjüngend ausgestaltet ist, dass der Gelenkabschnitt sich durch die beim Quetschen eintretende Durchmesserreduzierung des zylindrischen Abschnitts mit seinem den Flansch tragenden Ende relativ zum zylindrischen Abschnitt nach außen schwenkt und sich einer parallelen Orientierung zur Hülsenachse annähert. Dadurch wird der Flansch mitgeschwenkt, so dass die vom Anschlagbund abgewandte untere Kante des Flansches durch Schwenken des Flansches in die Nut hineingedreht wird.

Die Angaben zu Formen und Positionen in den Ansprüchen beziehen sich, soweit nichts anderes gesagt ist, auf den ungequetschten Ausgangszustand der Quetschkupplung. Soweit hier auf Radien der Quetschhülse Bezug genommen wird, ist damit der Radius der Außenwand des betreffenden Hülsenteils gemeint.

Die erfindungsgemäße Ausgestaltung der Quetschhülse und des Rohrleitungsnippels sorgt dafür, dass durch das Quetschen der Quetschhülse ein formschlüssiger Eingriff mit dem Rohrleitungsnippel in Bezug auf axiale Bewegungen hergestellt wird. Beim Crimpen reduziert sich der Durchmesser des zylindrischen Abschnitts, so dass das daran anschließende Ende des Gelenkabschnitts sich ebenfalls zu kleineren Radien zur Hülsenachse hin bewegt. Am vorderen Ende stützt sich der Gelenkabschnitt über den Flansch am Rohrleitungsnippel ab, so dass hier zunächst keine Bewegung zu kleineren Radien hin möglich ist. Dadurch, dass sich nur das an den zylindrischen Abschnitt anschließende Ende des Gelenkabschnitts zu kleineren Radien hin bewegt, führt der Gelenkabschnitt insgesamt eine Schwenkbewegung durch, die ihn insgesamt näher an eine parallele Orientierung zur Hülsenachse bringt. Dadurch wird auch der an dem Gelenkabschnitt anschließende Flansch mitgeschwenkt, wobei sich dabei die ursprünglich parallel zur Hülsenachse stehende gestanzte Wandseite des Flansches schräg zur Hülsenachse stellt, wodurch sich die vom Anschlagbund abgewandte untere Kante der gestanzten Wandseite nach unten verschwenkt und in die Nut des Rohrleitungsnippels hineindreht. Auf diese Weise liegt dann die vom Anschlagbund abgewandte untere Kante des Flansches schließlich in der Nut und die von dieser unteren Kante ausgehenden Wandseiten des Flansches liegen an den Rändern der Nut auf, so dass ein formschlüssiger Eingriff zwischen dem Flansch und der Nut hergestellt ist.

Damit der Gelenkabschnitt sich bei der Durchmesserreduzierung des zylindrischen Abschnitts beim Crimpen ausreichend verschwenkt, muss die Verjüngung des Gelenkabschnitts ein gewisses Mindestausmaß haben, was sich insbesondere erreichen lässt, wenn der zylindrische Abschnitt einen Durchmesser hat, der größer ist als der des zwischen Rohrleitungsnippel und Quetschhülse befindlichen Schlauches, so dass vor dem Crimpen zwischen dem zylindrischen Abschnitt der Quetschhülse und dem Schlauch ein Ringraum freibleibt. Beim Schließen dieses Ringraums in einer ersten Phase des Crimpens tritt bereits eine Verschenkung des Gelenkabschnitts ein, die sich in der Endphase des Crimpens noch verstärkt und so eine insgesamt ausgeprägte Verschenkung ergibt, die für den formschlüssigen Eingriff mit dem Rohrleitungsnippel vorteilhaft ist.

In einer bevorzugten Ausführungsform ist der Gelenkabschnitt derart ausgebildet, dass die Hülsenwand im Gelenkabschnitt eine mittlere Neigung im Bereich zwischen 5° und 30° zur Hülsenachse hat. Die mittlere Neigung der Hülsenwand des Gelenkabschnittes ist definiert durch die Gerade, die den Verbindungspunkt des Gelenkabschnitts mit dem Flansch mit dem Verbindungspunkt mit dem zylindrischen Abschnitt verbindet; die Neigung dieser Verbindungsgeraden zur Hülsenachse ist die mittlere Neigung des Gelenkabschnitts.

In einer bevorzugten Ausführungsform ist die Verjüngung des Gelenkabschnitts so ausgestaltet, dass der Gelenkabschnitt einen Radiusbereich zur Hülsenachse überbrückt, der so groß ist, dass die Differenz aus dem größeren Radius (angrenzend an den zylindrischen Abschnitt) und dem kleinen Radius (angrenzend an den Flansch) im Verhältnis zum größeren Radius wenigstens 5% beträgt. Vorzugsweise kann diese Differenz aus dem größeren Radius und dem kleineren Radius im Verhältnis zum größeren Radius zwischen 10% und 15% betragen.

In einer bevorzugten Ausführungsform kann der Gelenkabschnitt konisch geformt sein, so dass sich die Hülsenwand in dem Gelenkabschnitt konisch verjüngt. In diesem Fall ist die mittlere Neigung des Gelenkabschnitts gleich der Neigung der Hülsenwand des Gelenkabschnitts. Es sind aber neben einer solchen konischen Ausgestaltung des Gelenkabschnitts auch andere sich verjüngende Gestaltungen möglich, z.B. eine Verjüngung in zwei oder mehreren Schritten oder eine Verjüngung mit sich veränderter Neigung der Hülsenwand im Verlaufe des Gelenkabschnitts.

In einer bevorzugten Ausführungsform nimmt der zylindrische Abschnitt mehr als 60% der Länge der Quetschhülse in Längsrichtung ein.

In einer bevorzugten Ausführungsform nimmt der sich konisch aufweitende Abschnitt zwischen 10% und 30% der Länge der Quetschhülse in Längsrichtung ein.

In einer bevorzugten Ausführungsform ist die Quetschhülse aus kohlenstoffarmen Stahl, Edelstahl oder Messing hergestellt.

In einer bevorzugten Ausführungsform weist die Quetschhülse eine Wandstärke im Bereich von 1 bis 2 mm auf.

Bei dem Verfahren zum Verbinden eines Schlauches mit einem Rohrleitungsnippel unter Verwendung einer erfindungsgemäßen Quetschkupplung
werden die Quetschhülse und der Schlauch auf den Rohrleitungsnippel aufgeschoben, bis der Flansch der Quetschhülse an dem Anschlagbund anliegt und bis der Schlauch auf das von der Quetschhülse umgebene Ende des Rohrleitungsnippels aufgeschoben ist und das aufgeschobene Ende des Schlauches innen am Flansch der Quetschhülse anliegt,
werden in einem ersten Crimp-Schritt auf die Hülsenachse gerichtete Kräfte ausschließlich auf den zylindrischen Abschnitt der Quetschhülse ausgeübt, um dessen Durchmesser zu reduzieren, bis die Innenseite des zylindrischen Abschnitts den Schlauch erreicht, um dabei den Neigungswinkel des Gelenkabschnitts zur Hülsenachse zu reduzieren,
und werden in einem anschließenden zweiten Crimp-Schritt quetschende Kräfte gleichmäßig sowohl auf den zylindrischen Abschnitt als auch auf den Gelenkabschnitt ausgeübt, bis der Schlauch zwischen Quetschhülse und Rohrleitungsnippel eingeklemmt ist,
wodurch der Gelenkabschnitt sich durch den ersten und zweiten Crimp-Schritt einer zylindrischen Form angenähert hat und durch die Neigungsverminderung des Gelenkabschnitts der Flansch daran sich so gedreht hat, dass seine von dem Anschlagbund abgewandte untere Kante in die Nut hineingedreht ist.

Bei dem Verfahren zur Herstellung einer Quetschkupplung zur Verbindung eines Schlauches mit einem Rohrleitungsnippel
wird an einem Metallrohr ein nach außen vorstehender Anschlagbund gebildet und eine in axialer Richtung in konstantem Abstand dazu um den Umfang verlaufende Nut gebildet, um einen Rohrleitungsnippel zu bilden,
wird durch Tiefziehen aus Metallblech eine Quetschhülse geformt, in deren ursprünglich geschlossene Endseite durch Stanzen eine Öffnung gebildet wird, mit der die Quetschhülse auf den Rohrleitungsnippel aufschiebbar ist, wobei die Quetschhülse vorne einen auf die Hülsenachse gerichteten Flansch, der nach dem Stanzen der vorderen Öffnung in die ursprünglich geschlossene Endeseite als Rand stehengeblieben ist und dessen gestanzte Wandseite parallel zur Hülsenachse liegt, und hinten einen sich über einen Großteil der Länge der Quetschhülse erstreckenden zylindrischen Abschnitt aufweist,
wobei der Abstand zwischen dem Anschlagbund und der Nut der Rohrleitungsnippels so bemessen ist, dass der Flansch, wenn er an dem Anschlagbund anliegt, mit seiner von dem Anschlagbund abgewandten unteren Kante der gestanzten Wandseite über der Nut liegt,
wobei beim Tiefziehen der Quetschhülse zwischen Flansch und zylindrischem Abschnitt ein sich verjüngender Gelenkabschnitt gebildet wird, der ausgehend von einem größeren Radius zur Hülsenachse des anschließenden zylindrischen Abschnitts zu einem kleineren Radius des anschließenden Endes des Flansches sich derart verjüngend geformt wird, dass beim Crimpen der Quetschkupplung der Gelenkabschnitt sich durch die beim Quetschen eintretende Durchmesserreduzierung des zylindrischen Abschnitts mit seinem den Flansch tragenden Ende relativ zum gegenüberliegenden Ende nach außen schwenkt und sich einer parallelen Orientierung zur Hülsenachse annähert. Dabei wird der Flansch mitgeschwenkt, so dass dessen vom Anschlagbund abgewandte untere Kante durch das Schwenken des Flansches in die Nut hineingedreht wird.

In einer bevorzugten Ausführungsform des Verfahrens wird die Quetschhülse nach dem Tiefziehen einer Glühbehandlung unterzogen, um das Metall der Quetschhülse weicher zu machen.

In einer bevorzugten Ausführungsform des Verfahrens wird der Rohrleitungsnippel gebildet, indem in einem ursprünglich zylindrischen Metallrohr durch Umfaltung und Stauchung der außen vorstehende Anschlagbund durch Kaltumformung gebildet wird und die Nut ebenfalls durch Kaltumformung mit einer Rolle durch Einrollen gebildet wird.

In einer bevorzugten Ausführungsform des Verfahrens werden durch ein Rollenwerkzeug neben der genannten Nut weiter entfernt von dem Anschlagbund durch weitere Rollen gleichzeitig weitere Nuten in der Außenwand des Rohrleitungsnippels gebildet.

Die Erfindung wird im Folgenden anhand eines Ausführungsbeispiels unter Bezugnahme auf die Zeichnungen erläutert, in denen:

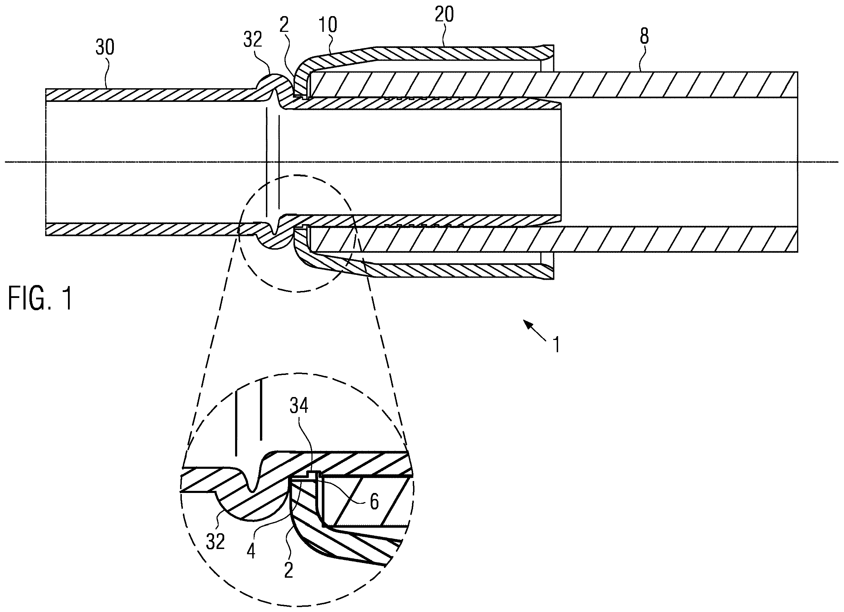

Fig. 1-5 schematische Querschnittsansichten einer Ausführungsform der Quetschkupplung in aufeinanderfolgenden Schritten bei Anwendung eines erfindungsgemäßen Verfahrens zum Verbinden eines Schlauches mit einem Rohrleitungsnippel unter Verwendung einer erfindungsgemäßen Quetschkupplung zeigen, wobei jeweils zusätzlich eine Ausschnittsvergrößerung eines Kontaktbereichs von Flansch und Anschlagbund gezeigt ist.

In dem folgenden Ausführungsbeispiel hat die Quetschhülse einen sich konisch verjüngenden Gelenkabschnitt, der den Abstand von einem größeren Radius des zylindrischen Endteils zu dem kleineren Endradius des Flansches überbrückt. Es sei jedoch noch einmal darauf hingewiesen, dass die Verjüngung in dem Gelenkabschnitt nicht notwendig mit konstanter Steigung erfolgen muss, sondern die Steigung der Hülsenwand in diesem Abschnitt variieren kann oder in mehreren Schritten die Verjüngung bewirken kann. Dessen ungeachtet wird im Folgenden mit Bezug auf das in den Figuren gezeigte Ausführungsbeispiel von einem sich "konisch" verjüngenden Abschnitt geredet.

Der Flansch hat üblicherweise eine Steigung von 90° zur Hülsenachse oder von fast 90°. Der sich verjüngende Abschnitt hat demgegenüber eine deutlich kleinere mittlere Steigung, wobei die mittlere Steigung definiert ist als die Steigung der Verbindungsgeraden durch den Anfangsradius des sich verjüngenden Gelenkabschnitts am Flansch und durch den größeren Radius am Ende des Gelenkabschnitts. Die mittlere Steigung des Gelenkabschnitts liegt vorzugsweise zwischen 5° und 30°.

Fig. 1 zeigt die Quetschkupplung im Ausgangszustand, nachdem Schlauch 8 und Quetschhülse 10 auf das Ende des Rohrleitungsnippels 2 aufgeschoben sind und bevor der Crimpvorgang begonnen hat.

Der Rohrleitungsnippel 30 ist mit einem Anschlagbund 32 versehen, der an einem ursprünglich zylindrischen Metallrohr durch Auffalten in einem kaltumformenden Verfahren gebildet worden ist. Der Rohrleitungsnippel 30 ist ferner mit einer nahe dem Anschlagbund und parallel dazu in der Außenwand umlaufenden Nut 34 versehen, die zur Herstellung eines formschlüssigen Eingriffs mit der Quetschhülse benötigt wird, wie weiter unten beschrieben wird. Ferner ist der Außendurchmesser des Rohrleitungsnippels 30 im Bereich des Rohrleitungsendes diesseits des Anschlagbundes (rechtes Ende in den Figuren) etwas kleiner als der Außendurchmesser jenseits des Anschlagbundes 32 gemacht, um dieses Rohrleitungsende an den zu verbindenden Schlauch anzupassen. Darüber hinaus ist der Rohrleitungsnippel an seinem Leitungsende, auf das der Schlauch 8 aufgeschoben wird, mit weiteren umlaufenden Nuten versehen, die die Haltewirkung für den eingeklemmten Schlauch und die Dichtungswirkung verbessern sollen, indem Material des Schlauches durch das Crimpen in diese Nuten gepresst wird, wobei auch die Dichtungswirkung durch mehrere solche "Dichtungsringe" hintereinander verbessert wird.

Die Quetschhülse 1 hat eine von einem Flansch 2 umgebene vordere Öffnung, mit der sie auf das Leitungsende des Rohrleitungsnippels 30 aufschiebbar ist. Die Quetschhülse 10 wird durch Tiefziehen eines Metallblechs zunächst zu einem becherförmigen Körper gebildet, wobei dann in der geschlossenen Endseite des becherförmigen Bauteils unten eine kreisförmige Öffnung gestanzt wird, so dass der Flansch 2 als Rand der ursprünglich geschlossenen Endseite stehenbleibt. Der Flansch 2 ist auf die Längsachse der Quetschhülse 1 zu gerichtet und liegt mit seiner durch das Stanzen entstandenen inneren Wandseite 4 parallel zur Längsachse der Quetschhülse 1. Das Tiefziehen der Quetschhülse 1 wird für dieses Ausführungsbeispiel so durchgeführt, dass die Hülsenwand in einem an den Flansch 2 anschließenden Bereich einen konischen Gelenkabschnitt 10 bildet. In dem in Fig. 1 dargestellten Ausführungsbeispiel beträgt der Neigungswinkel des konischen Gelenkabschnitts 10 etwa 10°. An den konischen Gelenkabschnitt 10 schließt sich ein zylindrischer Abschnitt 20 der Quetschhülse an, der den größeren Teil der Länge der Quetschhülse ausmacht.

Der Abstand der Nut 34 vom Anschlagbund 32 ist so gewählt, dass die untere Kante 6 des Flansches 2 in der Ausgangsstellung der Quetschkupplung über der Nut 34 liegt.

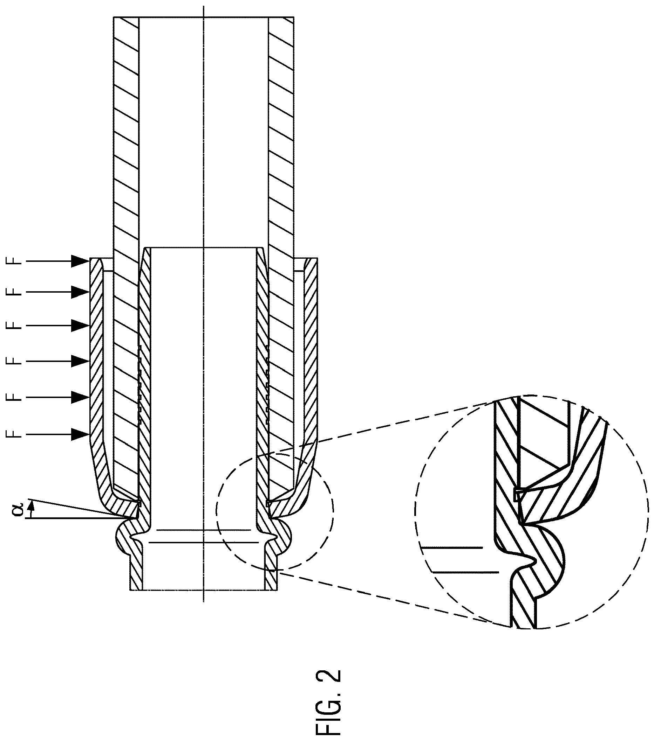

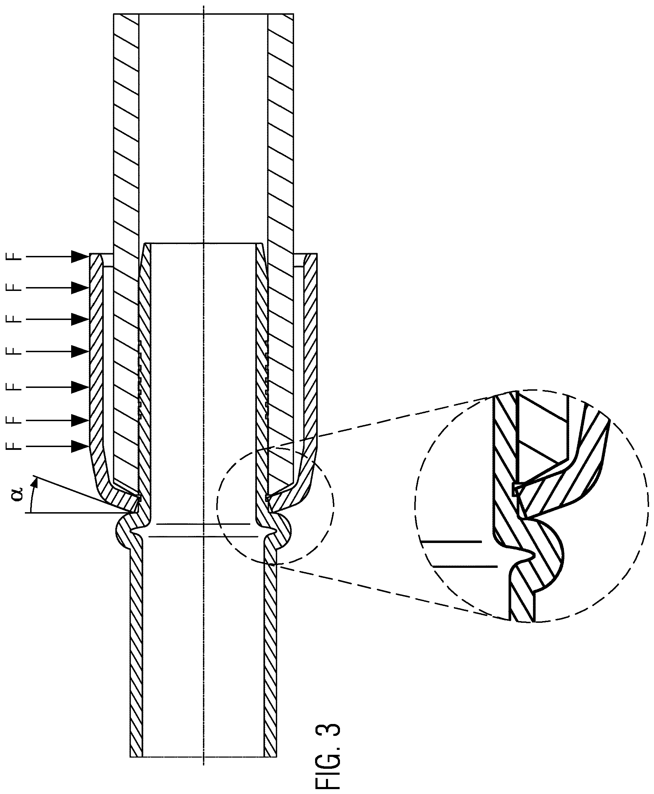

Nach dem Aufschieben der Quetschhülse 1 und des Schlauches 8 auf das Rohrleitungsende des Rohrleitungsnippels 2 in Fig. 1 hat in Fig. 2 der Crimp-Prozess mit dem ersten Schritt begonnen, in dem mit einem Crimp-Werkzeug auf die Hülsenachse gerichtete Kräfte im Bereich des zylindrischen Abschnitts 20 ausgeübt werden, die in Fig. 2 schematisch durch einige Kraftvektoren F angedeutet sind. Dabei werden in diesem ersten Schritt die verformenden Kräfte nur auf den zylindrischen Abschnitt 20, aber nicht auf den konischen Gelenkabschnitt 10 ausgeübt. Infolgedessen reduziert sich der Durchmesser der Quetschhülse im zylindrischen Abschnitt 20, wie in Fig. 3 angedeutet. Der konische Gelenkabschnitt 10 stützt sich in dieser Phase mit dem daran anschließenden Flansch 2 auf den Rohrleitungsnippel 30 ab, so dass der konische Gelenkabschnitt 10 der Reduktion des zylindrischen Abschnitts 20 auf einen kleineren Durchmesser nicht folgen kann. Daher reduziert sich entsprechend der Neigungswinkel der Hülsenwand des konischen Gelenkabschnitts 10 gegenüber der Hülsenachse, wobei der Flansch 12 diese Drehung (Neigungsveränderung) mitmacht, wie durch den Winkel α angedeutet, der sich in Fig. 3 gegenüber Fig. 2 vergrößert hat.

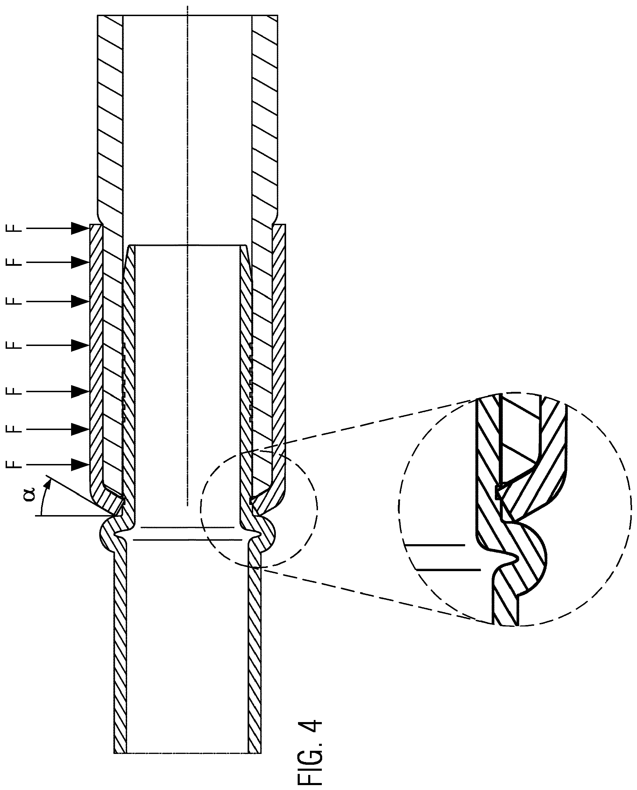

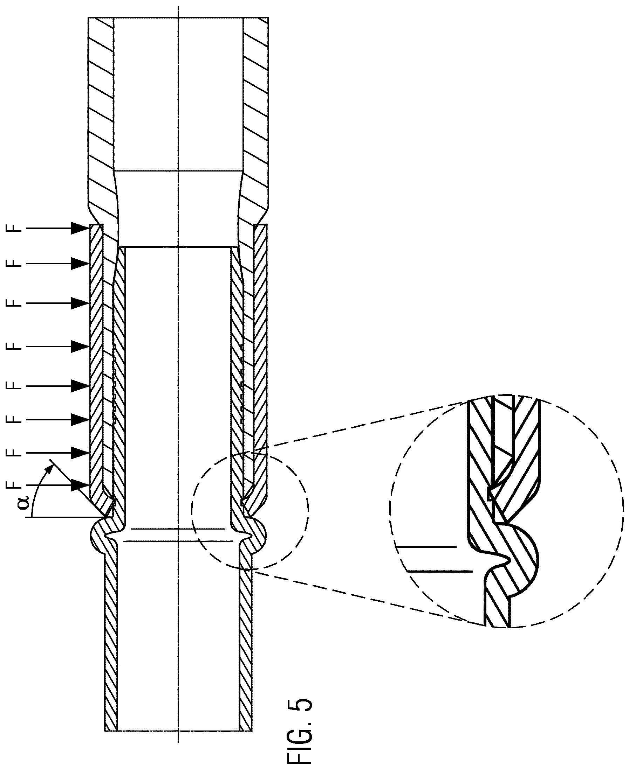

Im zweiten Schritt des Crimp-Prozesses, der in den Fig. 4 und 5 gezeigt ist, werden die quetschenden Kräfte sowohl auf den sich ursprünglich konischen Gelenkabschnitt 10 als auch auf den zylindrischen Abschnitt 20 ausgeübt, um eine weitere Durchmesserreduktion zu bewirken. Auf diese Weise wird der sich ursprünglich konische Gelenkabschnitt 10 durch die Durchmesserreduktion des zylindrischen Abschnitts 20 in einen zylindrischen Abschnitt verformt, wie in Fig. 4 dargestellt, was zu einer weiteren Vergrößerung des Winkels α (Winkel der Vorderwand des Flansches 2 zu einer Senkrechten auf die Hülsenachse) zeigt. Ebenfalls ist in Fig. 4 zu erkennen, dass die Schwenkbewegung des Flansches 2 dazu geführt hat, dass die untere Kante 6 des Flansches 2, die von dem Anschlagbund 4 abgewandt ist, sich in die Nut 34 hineingedreht hat.

In dem in Fig. 4 gezeigten Stadium hat die Innenwand der Quetschhülse die Außenwand des Schlauches erreicht. Im weiteren Verlauf des zweiten Schrittes des Crimp-Prozesses wird der Durchmesser der Quetschhülse weiter reduziert, so dass der Schlauch 8 zwischen dem Rohrleitungsnippel 30 und der Quetschhülse 1 eingeklemmt wird. Beim Übergang von Fig. 4 zu Fig. 5 wird der Durchmesser der Quetschhülse weiter reduziert, wodurch der Flansch 2 der Quetschhülse weiter nach vorne gebogen wird, was zur Folge hat, dass sich die untere Kante 6 des Flansches 2 weiter in die Nut 34 hineindreht. Die weitere Drehung und Biegung des Flansches 14 am Ende des Crimp-Prozesses ist an der Vergrößerung des Winkels α in Fig. 5 zu erkennen.

In dem in Fig. 5 dargestellten eingeklemmten Zustand des Schlauches 8 wird auch die Funktion der oben schon angesprochenen weiteren Nuten in der Oberfläche des Rohrleitungsnippels deutlich. Durch diese Profilierung durch die Nuten wird der Schlauch 8 nämlich in dem eingeklemmten Zustand besser gegen axiale Bewegungen gesichert auf dem Rohrleitungsnippel gehalten. Darüber hinaus verbessern die weiteren Nuten die Abdichtung des Rohrleitungsnippels in dem Schlauch, denn durch das Einklemmen wird Material des flexiblen Schlauches in in die Nuten hineingedrückt, so dass mehrere axial aufeinanderfolgende Nuten sozusagen eine Reihe von hintereinander liegenden "Dichtungsringen" bilden. Diese weiteren Nuten werden vorzugsweise in dem gleichen Schritt hergestellt, in dem die Nut nahe am Anschlag und für den formschlüssigen Eingriff gebildet wird. Das kann dadurch geschehen, dass ein Rollwerkzeug mit jeweils einer Rolle für jede Nut verwendet wird, wobei dann alle Nuten gleichzeitig durch das Rollwerkzeug eingerollt werden.

Als Material für die Quetschhülse kann zum Beispiel ein kohlenstoffarmer Stahl mit der Bezeichnung DC04 (nach DIN EN 10130) verwendet werden, der zum Tiefziehen geeignet ist. Nach dem Tiefziehen wird die vorgeformte Quetschhülse einer Glühbehandlung unterzogen, um das Material wieder weicher zu machen, da es während des Crimp-Prozesses eine weitere starke Deformation durchmachen muss. Eine solche Quetschhülse aus kohlenstoffarmen Stahl wird dann gegen Korrosion geschützt, z.B. durch eine galvanische Behandlung mit einer Zink-Nickel-Beschichtung. Als alternatives Material für die Quetschhülse kann Edelstahl verwendet werden. Der Vorteil von Edelstahl ist, dass er keinen Korrosionsschutz benötigt, auf der anderen Seite aber auch teurer ist als kohlenstoffarmer Stahl. Für Anwendungen mit sehr hohen Qualitätsanforderungen ist ein nichtrostender austenitischer Stahl bevorzugt, z.B. XCrNi 18-10 gemäß DIN EN 10088. Grundsätzlich kann als Material für die Quetschhülse auch Messing verwendet werden.

Für die vorgesehenen typischen Anwendungen wird die Quetschhülse z.B. mit einer Wandstärke von 1,6 mm hergestellt. Für weniger belastete Anwendungen könnten auch Wandstärken im Bereich von 1,2 bis 1,4 vorgesehen sein, während für höher belastete Anwendungen Wandstärken im Bereich von 1,8 bis 2 mm vorgesehen sein könnten. Natürlich können je nach Anwendung auch größere oder kleinere Wandstärken vorkommen.

Ein typischer Anwendungsfall für die Quetschkupplung betrifft einen Schlauch mit 16 mm Innendurchmesser, der aus einer Innenröhre aus PTFE und einer äußeren Armierung aus Edelstahldrahtgeflecht besteht. Ein solcher Schlauch wird für Druckluft am Motor eines Lastkraftwagens eingesetzt. Die hohen Arbeitstemperaturen von bis zu 160 °C in Kombination mit Druckwerten von bis zu 16 bar sowie die Druckschwankungen und Temperaturänderungen (von kalt auf Arbeitstemperatur und zurück in vielen Zyklen über die Lebensdauer) könnten zu Verschlechterungen der Crimp-Verbindung führen, wenn die Kompression der Crimp-Verbindung über die Lebensdauer nachlässt, was zu Risiken einer Ablösung des Schlauchs oder Risiken von Leckagen führt. Daher ist eine feste, formschlüssige Crimp-Verbindung mit mechanischer Verriegelung, wie im vorliegenden Fall durch die Kante des Flansches in der Nut des Rohrleitungsnippels, bevorzugt.

Der Rohrleitungsnippel kann aus einem Stahlrohr hergestellt werden. Dieses kann durch Kaltumformen bearbeitet werden, um den Anschlagbund 32 aufzufalten. Ferner kann die Nut 34 durch Kaltumformen mit einem Walzwerkzeug erzeugt werden.

## Patentansprüche

1. Quetschkupplung zur Verbindung eines Schlauches mit einem Rohrleitungsnippel mit
einem Rohrleitungsnippel (30), an dem ein nach außen vorstehender Anschlagbund (32) und eine in axialer Richtung des Rohrleitungsnippels in konstantem Abstand dazu um den Umfang verlaufende Nut (34) gebildet sind, und
einer auf den Rohrleitungsnippel (30) aufschiebbaren Quetschhülse (1), die durch Tiefziehen geformt ist und in deren ursprünglich geschlossenes Ende eine kreisförmige, koaxiale, vordere Öffnung zum Aufschieben auf den Rohrleitungsnippel gestanzt ist, wobei die Quetschhülse vorne einen auf die Hülsenachse gerichteten Flansch (2), der nach dem Stanzen der vorderen Öffnung in die ursprünglich geschlossene Endseite als Rand stehengeblieben ist und dessen gestanzte Wandseite (4) parallel zur Hülsenachse liegt, und hinten einen sich über einen Großteil der Länge der Quetschhülse erstreckenden zylindrischen Abschnitt aufweist,
wobei der Abstand zwischen dem Anschlagbund (32) und der Nut (34) des Rohrleitungsnippels so bemessen ist, dass der Flansch (2), wenn er an dem Anschlagbund anliegt, mit seiner von dem Anschlagbund abgewandten unteren Kante der gestanzten Wandseite (4) über der Nut (34) liegt,
wobei zwischen zylindrischem Abschnitt (20) und Flansch (2) ein sich verjüngender Gelenkabschnitt (10) gebildet ist, der ausgehend von einem größeren Radius zur Hülsenachse des anschließenden zylindrischen Abschnitts zu einem kleineren Radius des anschließenden Endes des Flansches sich derart verjüngend ausgestaltet ist, dass der Gelenkabschnitt (10) sich durch die beim Quetschen eintretende Durchmesserreduzierung des zylindrischen Abschnitts mit seinem den Flansch (2) tragenden Ende relativ zu dem zylindrischen Abschnitt (20) nach außen schwenkt und sich einer parallelen Orientierung zur Hülsenachse annähert, wodurch der Flansch mitgeschwenkt wird, so dass des Flansches vom Anschlagbund abgewandte untere Kante (6) durch das Schwenken des Flansches (2) in die Nut (34) hineingedreht wird.

2. Quetschkupplung nach Anspruch 1, wobei die Hülsenwand in dem Gelenkabschnitt (10) eine mittlere Neigung im Bereich zwischen 5° und 30° zur Hülsenachse hat.

3. Quetschkupplung nach Anspruch 1 oder 2, wobei die Verjüngung des Gelenkabschnitts (10) so ausgestaltet ist, dass der Gelenkabschnitt einen Radiusbereich zur Hülsenachse überbrückt, so dass die Differenz aus dem größeren Radius und dem kleineren Radius im Verhältnis zum größeren Radius wenigstens 5% beträgt.

4. Quetschkupplung nach Anspruch 3, wobei die Differenz aus dem größeren Radius und dem kleineren Radius im Verhältnis zum größeren Radius zwischen 10% und 15% beträgt.

5. Quetschkupplung nach einem der vorhergehenden Ansprüche, wobei die Hülsenwand sich in dem Gelenkabschnitt (10) konisch verjüngt.

6. Quetschkupplung nach Anspruch 5, wobei die Hülsenwand in dem konisch Gelenkabschnitt (10) unter einem Winkel im Bereich zwischen 5° und 30° zur Hülsenachse verläuft.

7. Quetschkupplung nach einem der Ansprüche 1 bis 6, wobei der zylindrische Abschnitt (20) mehr als 60% der Länge der Quetschhülse (1) in Längsrichtung einnimmt.

8. Quetschkupplung nach einem der vorhergehenden Ansprüche, wobei der Gelenkabschnitt (10) zwischen 10% und 30% der Länge der Quetschhülse (1) in Längsrichtung einnimmt.

9. Quetschkupplung nach einem der vorhergehenden Ansprüche, wobei die Quetschhülse (1) aus kohlenstoffarmen Stahl, Edelstahl oder Messing hergestellt ist.

10. Quetschkupplung nach einem der vorhergehenden Ansprüche, wobei die Quetschhülse (1) eine Wandstärke im Bereich von 1 bis 2 mm aufweist.

11. Verfahren zum Verbinden eines Schlauches mit einem Rohrleitungsnippel (30) unter Verwendung einer Quetschkupplung nach einem der vorhergehenden Ansprüche, wobei bei dem Verfahren
die Quetschhülse (1) und der Schlauch auf den Rohrleitungsnippel (30) aufgeschoben werden, bis der Flansch (2) der Quetschhülse (1) an dem Anschlagbund (32) anliegt und bis der Schlauch auf das von der Quetschhülse umgebene Ende des Rohrleitungsnippels aufgeschoben ist und das aufgeschobene Ende des Schlauches innen am Flansch (2) der Quetschhülse anliegt,
in einem ersten Crimp-Schritt auf die Hülsenachse gerichtete Kräfte ausschließlich auf den zylindrischen Abschnitt (20) der Quetschhülse ausgeübt werden, um dessen Durchmesser zu reduzieren, bis die Innenseite des zylindrischen Abschnitts den Schlauch erreicht, um dabei den Neigungswinkel des Gelenkbschnitts (10) zur Hülsenachse zu reduzieren, und
in einem anschließenden zweiten Crimp-Schritt quetschende Kräfte gleichmäßig sowohl auf den zylindrischen Abschnitt (20) als auch auf den Gelenakbschnitt (10) ausgeübt werden, bis der Schlauch zwischen Quetschhülse (1) und Rohrleitungsnippel (30) eingeklemmt ist,
wodurch der Gelenkabschnitt (10) sich durch den ersten und zweiten Crimp-Schritt einer zylindrischen Form angenähert hat und durch die Neigunsverminderung des Gelenkabschnitts der Flansch (2) daran sich so gedreht hat, dass seine von dem Anschlagbund abgewandte untere Kante (6) in die Nut (34) hineingedreht ist.

12. Verfahren zur Herstellung einer Quetschkupplung zur Verbindung eines Schlauches mit einem Rohrleitungsnippel (30), bei dem
an einem Metallrohr ein nach außen vorstehender Anschlagbund (32) gebildet wird und eine in axialer Richtung in konstantem Abstand dazu um den Umfang verlaufende Nut (34) gebildet wird, um einen Rohrleitungsnippel (30) zu bilden,
durch Tiefziehen aus Metallblech eine Quetschhülse (1) geformt wird, in deren ursprünglich geschlossener Endseite durch Stanzen eine Öffnung gebildet wird, mit der die Quetschhülse auf den Rohrleitungsnippel aufschiebbar ist, wobei die Quetschhülse vorne einen auf die Hülsenachse gerichteten Flansch (2), der nach dem Stanzen der vorderen Öffnung in die ursprünglich geschlossene Endseite als Rand stehengeblieben ist und dessen gestanzte Wandseite (4) parallel zur Hülsenachse liegt, und hinten einen sich über einen Großteil der Länge der Quetschhülse erstreckenden zylindrischen Abschnitt (20) aufweist,
wobei der Abstand zwischen dem Anschlagbund (32) und der Nut (34) des Rohrleitungsnippels so bemessen ist, dass der Flansch (2), wenn er an dem Anschlagbund anliegt, mit seiner von dem Anschlagbund abgewandten unteren Kante der gestanzten Wandseite (4) über der Nut (34) liegt,
wobei beim Tiefziehen der Quetschhülse zwischen zylindrischem Abschnitt (20) und Flansch (2) ein sich verjüngender Gelenkabschnitt (10) gebildet wird, der ausgehend von einem größeren Radius zur Hülsenachse des anschließenden zylindrischen Abschnitts zu einem kleineren Radius des anschließenden Endes des Flansches sich derart verjüngend geformt wird, dass beim Crimpen der Quetschkupplung der Gelenkabschnitt (10) sich durch die beim Quetschen eintretende Durchmesserreduzierung des zylindrischen Abschnitts mit seinem den Flansch (2) tragenden Ende relativ zum gegenüberliegenden Ende nach außen schwenkt und sich einer parallelen Orientierung zur Hülsenachse annähert, wodurch der Flansch mitgeschwenkt wird, so dass dessen vom Anschlagbund abgewandte untere Kante (6) durch das Schwenken des Flansches (2) in die Nut (34) hineingedreht wird.

13. Verfahren zur Herstellung einer Quetschkupplung nach Anspruch 12, bei dem die Quetschhülse (1) nach dem Tiefziehen einer Glühbehandlung unterzogen wird, um das Metall der Quetschhülse weicher zu machen.

14. Verfahren zur Herstellung einer Quetschkupplung nach Anspruch 12 oder 13, bei dem der Rohrleitungsnippel (30) gebildet wird, indem an einem ursprünglich zylindrischen Metallrohr durch Umfaltung und Stauchung der nach außen vorstehende Anschlagbund durch Kaltumformung gebildet wird und die Nut ebenfalls durch Kaltumformung mit einer Rolle durch Einrollen gebildet wird.

15. Verfahren zur Herstellung einer Quetschkupplung nach Anspruch 14, bei dem durch ein Rollenwerkzeug neben der genannten Nut (34) weiter entfernt von dem Anschlagbund durch weitere Rollen gleichzeitig weitere Nuten in der Wand des Rohrleitungsnippels gebildet werden.

## Claims

1. Crimp coupling for connecting a hose to a fitting, comprising
a fitting (30) on which an outwardly projecting stop collar (32) and a groove (34) are formed, which groove is circumferentially extending around the fitting at a constant axial distance to the stop collar, and
a crimping ferrule (1) which can be slid onto the fitting (30) and which is formed by deep drawing, and in which a circular opening is stamped in the originally closed bottom side for sliding the ferrule onto the fitting, wherein the crimping ferrule at its front end comprises a flange (2) directed towards the ferrule axis, which flange remained as a margin after stamping the front opening in the originally closed bottom side and which is oriented with its stamped wall surface (4) parallel to the ferrule axis, and comprises in the back a cylindrical section extending over a major part of the length of the crimping ferrule,
wherein the distance between the stop collar (32) and the groove (34) of the fitting is dimensioned such that the flange (2), when it is in abutment on the stop collar, is, with its rearward lower edge facing away from the stop collar, disposed above the groove (34),
wherein between the cylindrical section (20) and the flange (2) a tapering hinge section (10) is formed which is formed in a tapering manner starting at a larger radius to the ferrule axis at the adjoining cylindrical section to a smaller radius at the adjoining end of the flange in such a manner that the hinge section is, due to the diameter reduction of the cylindrical section during crimping, pivoting with its end carrying the flange (2) in outward direction relative to the cylindrical section and is approaching a parallel orientation to the ferrule axis, whereby also the flange is pivoted such that the lower edge of the flange facing away from the stop collar is turned into the groove (34) by the pivotal movement of the flange (2).

2. Crimp coupling according to claim 1, wherein the ferrule wall in the hinge section (10) has an average slope in the range between 5° and 30° to the ferrule axis.

3. Crimp coupling according to claim 1 or 2, wherein the tapering of the hinge section (10) is arranged in such a manner that the hinge section bridges a radius range to the ferrule axis such that the ratio between the radius difference of the larger radius and the smaller radius and the lager radius amounts to at least 5%.

4. Crimp coupling according to claim 3, wherein the ratio between the difference of the larger radius and the smaller radius and the larger radius is between 10% and 15%.

5. Crimp coupling according to any of the preceding claims, wherein the ferrule wall is conically tapering in the hinge section (10).

6. Crimp coupling according to claim 5, wherein the ferrule wall extends in the conical hinge section (10) at an angle in the range between 5° and 30° to the ferrule axis.

7. Crimp coupling according to any of the claims 1 to 6, wherein the cylindrical section (20) occupies more than 60% of the length of the crimping ferrule (1) in longitudinal direction.

8. Crimp coupling according to any of the preceding claims, wherein the hinge section (10) occupies between 10% and 30% of the length of the crimping ferrule (1) in longitudinal direction.

9. Crimp coupling according to any of the preceding claims, wherein the crimping ferrule (1) is made of low carbon steel, stainless steel or brass.

10. Crimp coupling according to any of the preceding claims, wherein the crimping ferrule has a wall thickness in the range 1 mm to 2 mm.

11. Method for connecting a hose to a fitting (30) utilizing a crimp coupling according to any of the preceding claims, wherein
the crimping ferrule (1) and the hose are slid onto the fitting (30) until the flange (2) of the crimping ferrule (1) comes into abutment on the stop collar (32) and until the hose is slid onto the end of the fitting surrounded by the crimping ferrule and the inserted end of the hose is in abutment on the inner side of the flange (2),
in a first crimping step forces directed towards the ferrule axis are exerted exclusively on the cylindrical section (20) to reduce its diameter until the inner side of the cylindrical section reaches the hose, to reduce at the same time the sloping angle of the hinge section (10) to the ferrule axis,
in a subsequent second crimping step crimping forces are uniformly exerted on the cylindrical section (20) as well as on the hinge section (10) until the hose is clamped between the crimping ferrule (1) and the fitting (30),
whereby the hinge section (10) has, by the first and second crimping steps, approached a cylindrical shape and by the reduction of the slope of the hinge section the flange (2) on it has turned such that its lower edge (6) remote from the stop collar has turned into the groove (34).

12. Method for making a crimp coupling for connecting a hose to a fitting (30), wherein
on a metal tube an outwardly projecting stop collar (32) is formed and in axial direction in constant distance thereto a circumferentially extending groove (34) is formed to provide a fitting (30),
a crimping ferrule (1) is formed by deep drawing metal sheet, in which crimping ferrule in the originally closed bottom side an opening is formed by stamping, through which opening the crimping ferrule can be slid onto the fitting, wherein the crimping ferrule has at its front a flange directed towards the ferrule axis, which flange remained as a margin after stamping the front opening in the originally closed bottom side and which has a stamped wall surface (4) parallel to the ferrule axis, and has at its back a cylindrical section (20) extending over a major part of the length of the crimping ferrule,
wherein the distance between the stop collar (32) and the groove (34) of the fitting is dimensioned such that the flange (2), when it is in abutment on the stop collar, is disposed with its lower edge of the stamped wall side (4) remote from the stop collar above the groove (34),
wherein during deep drawing the crimping ferrule between flange (2) and cylindrical section (20) a tapering hinge section (10) is formed which, starting from a larger radius to the ferrule axis at the adjoining cylindrical section, extends in a tapering manner to a smaller radius at the end adjoining the flange in such a manner that during crimping of the crimp coupling the hinge section (10) is with its end carrying the flange (2) pivoted outwards compared to the opposite end by diameter reduction of the cylindrical section during the crimping, whereby also the flange is pivoted such that its lower edge remote from the stop collar is turned into the groove (34) by the pivoting of the flange (2).

13. Method for making a crimp coupling according to claim 12, wherein the crimping ferrule (1) after the deep drawing is exposed to a annealing treatment to make the metal of the crimping ferrule softer again.

14. Method for making a crimp coupling according to claim 12 or 13, wherein the fitting (30) is formed by processing an originally cylindrical metal tube by folding and by compressing in a cold forming manner to form an outwardly projecting stop collar and wherein, likewise in a cold forming manner, a roller is used to form the groove by rolling.

15. Method for making a crimp coupling according to claim 14, wherein besides said groove (34) simultaneously further grooves are formed in the wall of the fitting further away from the stop collar by further rollers.

## Revendications

1. Raccord à serrage permettant de raccorder un tuyau à un raccord de tuyauterie avec
un raccord de tuyauterie (30), au niveau duquel un collet de butée (32) faisant saillie vers l'extérieur et une rainure (34) s'étendant dans la direction axiale du raccord de tuyauterie à distance constante de celui-ci autour de la circonférence sont formés, et
une douille de serrage (1) pouvant être enfilée sur le raccord de tuyauterie (30), qui est formée par emboutissage et à son extrémité initialement fermée, une ouverture avant, coaxiale, circulaire à enfiler sur le raccord de tuyauterie est estampée, dans lequel la douille de serrage présente devant une bride (2) pointant sur l'axe de douille, qui s'est immobilisée après l'estampage de l'ouverture avant dans le côté extrémité initialement fermé en tant que bord et son côté paroi estampé (4) se trouve parallèlement à l'axe de fouille, et derrière une section cylindrique s'étendant sur une grande partie de la longueur de la douille de serrage,
dans lequel la distance entre le collet de butée (32) et la rainure (34) du raccord de tuyauterie est dimensionnée de sorte que la bride (2), lorsqu'elle s'applique sur le collet de butée, se trouve avec son arête inférieure opposée au collet de butée du côté paroi estampé (4) au-dessus de la rainure (34),
dans lequel une section d'articulation (10) se rétrécissant, qui est réalisée en se rétrécissant d'un grand rayon par rapport à l'axe de douille de la section cylindrique se raccordant à un petit rayon de l'extrémité se raccordant de la bride, est formée entre la section cylindrique (20) et la bride (2), de sorte que la section d'articulation (10) bascule vers l'extérieur par la réduction de diamètre survenant lors du serrage de la section cylindrique avec son extrémité portant la bride (2) par rapport à la section cylindrique (20) et s'approche d'une orientation parallèle par rapport à l'axe de douille, ce par quoi la bride est basculée en même temps de sorte que l'arête inférieure (6) opposée au collet de butée de la bride est vissée par le basculement de la bride (2) dans la rainure (34).

2. Raccord à serrage selon la revendication 1, dans lequel la paroi de douille dans la section d'articulation (10) a une inclinaison moyenne dans la plage entre 5° et 30° par rapport à l'axe de douille.

3. Raccord à serrage selon la revendication 1 ou 2, dans lequel le rétrécissement de la section d'articulation (10) est réalisé de sorte que la section d'articulation enjambe une plage de rayon par rapport à l'axe de douille de sorte que la différence entre le grand rayon et le petit rayon par rapport au grand rayon est d'au moins 5 %.

4. Raccord à serrage selon la revendication 3, dans lequel la différence entre le grand rayon et le petit rayon par rapport au grand rayon est entre 10 % et 15 %.

5. Raccord à serrage selon l'une quelconque des revendications précédentes, dans lequel la paroi de douille se rétrécit de manière conique dans la section d'articulation (10).

6. Raccord à serrage selon la revendication 5, dans lequel la paroi de douille s'étend dans la section d'articulation (10) conique selon un angle dans la plage entre 5° et 30° par rapport à l'axe de douille.

7. Raccord à serrage selon l'une quelconque des revendications 1 à 6, dans lequel la section cylindrique (20) prend plus de 60 % de la longueur de la douille de serrage (1) dans la direction longitudinale.

8. Raccord à serrage selon l'une quelconque des revendications précédentes, dans lequel la section d'articulation (10) prend entre 10 % et 30 % de la longueur de la douille de serrage (1) dans la direction longitudinale.

9. Raccord à serrage selon l'une quelconque des revendications précédentes, dans lequel la douille de serrage (1) est fabriquée en un acier pauvre en carbone, acier inoxydable ou laiton.

10. Raccord à serrage selon l'une quelconque des revendications précédentes, dans lequel la douille de serrage (1) présente une épaisseur de paroi dans la plage de 1 à 2 mm.

11. Procédé permettant de raccorder un tuyau à un raccord de tuyauterie (30) en utilisant un raccord à serrage selon l'une quelconque des revendications précédentes, dans lequel dans le procédé
la douille de serrage (1) et le tuyau sont enfilés sur le raccord de tuyauterie (30), jusqu'à ce que la bride (2) de la douille de serrage (1) s'applique sur le collet de butée (32) et jusqu'à ce que le tuyau soit enfilé sur l'extrémité entourée par la douille de serrage du raccord de tuyauterie et l'extrémité enfilée du tuyau s'applique à l'intérieur sur la bride (2) de la douille de serrage,
dans une première étape de sertissage, des forces dirigées sur l'axe de douille sont exercées exclusivement sur la section cylindrique (20) de la douille de serrage afin de réduire son diamètre, jusqu'à ce que le côté intérieur de la section cylindrique atteigne le tuyau pour réduire ce faisant l'angle d'inclinaison de la section d'articulation (10) par rapport à l'axe de douille, et
dans une deuxième étape de sertissage consécutive, des forces de serrage sont exercées de manière uniforme aussi bien sur la section cylindrique (20) que sur la section d'articulation (10), jusqu'à ce que le tuyau soit coincé entre la douille de serrage (1) et le raccord de tuyauterie (30),
ce par quoi la section d'articulation (10) s'est approchée par la première et la deuxième étape de sertissage d'une forme cylindrique et la bride (2) s'est tournée par la réduction d'inclinaison de la section d'articulation de sorte que son arête inférieure (6) opposée au collet de butée est vissée dans la rainure (34).

12. Procédé de fabrication d'un raccord à serrage permettant de raccorder un tuyau à un raccord de tuyauterie (30), dans lequel
un collet de butée (32) faisant saillie vers l'extérieur est formé au niveau d'un tube métallique et une rainure (34) s'étendant dans la direction axiale à distance constante de celui-ci autour de la circonférence est formée pour former un raccord de tuyauterie (30),
une douille de serrage (1) est formée en tôle métallique par emboutissage, dans lequel côté extrémité initialement fermé, une ouverture est formée par estampage, avec laquelle la douille de serrage peut être enfilée sur le raccord de tuyauterie, dans lequel la douille de serrage présente devant une bride (2) pointant sur l'axe de douille, qui s'est immobilisée après l'estampage de l'ouverture avant dans le côté extrémité initialement fermé en tant que bord et son côté paroi estampé (4) se trouve parallèlement à l'axe de fouille, et derrière une section cylindrique (20) s'étendant sur une grande partie de la longueur de la douille de serrage,
dans lequel la distance entre le collet de butée (32) et la rainure (34) du raccord de tuyauterie est dimensionnée de sorte que la bride (2), lorsqu'elle s'applique sur le collet de butée, se trouve avec son arête inférieure opposée au collet de butée du côté paroi estampé (4) au-dessus de la rainure (34),
dans lequel une section d'articulation (10) se rétrécissant, qui est réalisée en se rétrécissant d'un grand rayon par rapport à l'axe de douille de la section cylindrique se raccordant à un petit rayon de l'extrémité se raccordant de la bride, est formée lors de l'emboutissage de la douille de serrage entre la section cylindrique (20) et la bride (2), de sorte que lors du sertissage du raccord à serrage, la section d'articulation (10) bascule vers l'extérieur par la réduction de diamètre survenant lors du serrage de la section cylindrique avec son extrémité portant la bride (2) par rapport à l'extrémité opposée et s'approche d'une orientation parallèle par rapport à l'axe de douille, ce par quoi la bride est basculée en même temps de sorte que son arête inférieure (6) opposée au collet de butée est vissée par le basculement de la bride (2) dans la rainure (34).

13. Procédé de fabrication d'un raccord à serrage selon la revendication 12, dans lequel la douille de serrage (1) est soumise après l'emboutissage à un traitement de recuit, afin de ramollir le métal de la douille de serrage.

14. Procédé de fabrication d'un raccord à serrage selon la revendication 12 ou 13, dans lequel le raccord de tuyauterie (30) est formé par la formation au niveau d'un tube métallique initialement cylindrique par pliage et compression du collet de butée faisant saillie vers l'extérieur par écrouissage et la formation de la rainure également par écrouissage avec un rouleau par enroulement.

15. Procédé de fabrication d'un raccord à serrage selon la revendication 14, dans lequel d'autres rainures sont formées en même temps dans la paroi du raccord de tuyauterie par un outil à rouleau à côté de ladite rainure (34) à plus grande distance du collet de butée par d'autres rouleaux.
